# EUROPEAN PATENT SPECIFICATION

(11) **EP 4 266 462 B1**
(45) Date of publication and mention of the grant of the patent: **09.09.2026**
(21) Application number: 22862817.8
(22) Date of filing: 20.06.2022
(51) Int. Cl.: H01M 50/20, H01M 10/04, H01M 50/209, H01M 50/242, H01M 50/244, H01M 50/249, H01M 50/264

(54) **BATTERY CASING, BATTERY, ELECTRICAL DEVICE, AND METHOD AND DEVICE FOR MANUFACTURING BATTERY**
BATTERIEGEHÄUSE, BATTERIE, ELEKTRISCHE VORRICHTUNG SOWIE VERFAHREN UND VORRICHTUNG ZUR HERSTELLUNG EINER BATTERIE
BOÎTIER DE BATTERIE, BATTERIE, DISPOSITIF ÉLECTRIQUE, ET PROCÉDÉ ET DISPOSITIF DE FABRICATION DE BATTERIE

(30) Priority: 31.08.2021 CN 202111016048
(43) Date of publication of application: 25.10.2023
(73) Proprietor: Contemporary Amperex Technology (Hong Kong) Limited, Central, Central And Western District (HK)
(72) Inventor: XU, Chenyi, Ningde, Fujian 352100 (CN); ZENG, Zhimin, Ningde, Fujian 352100 (CN); YANG, Haiqi, Ningde, Fujian 352100 (CN); TANG, Yu, Ningde, Fujian 352100 (CN); HUANG, Xiaoteng, Ningde, Fujian 352100 (CN); WANG, Peng, Ningde, Fujian 352100 (CN)
(74) Representative: Holt, Lucy Rose
(86) International application number: PCT/CN2022/099776
(87) International publication number: WO 2023/029676

(56) References cited:
- WO-A1-2016/158395
- CN-A- 110 994 068
- CN-U- 205 303 554
- CN-U- 207 800 698
- CN-U- 209 447 881
- CN-U- 210 110 863
- US-A1- 2017 279 088
- US-A1- 2019 372 173

## Description

### TECHNICAL FIELD

This application relates to the field of batteries, and in particular, to a battery box, a battery, an electric device, and a method and device for manufacturing battery.

### BACKGROUND

In the existing battery manufacturing process, battery cells are fixed in a box using binder, but binder overflow usually occurs. Binder overflow not only compromises the safety performance of batteries in use but also diminishes the energy density of the batteries. Therefore, how binder overflow is reduced during battery assembly has become an urgent problem to be solved. Document CN 209 447 881 U discloses a battery box know in the art.

### SUMMARY

To resolve the foregoing problem, a first aspect of this application provides a battery box, which can reduce binder overflow during battery assembly and improve the safety performance of batteries.

The first aspect of this application provides a battery box including a support member and an expansion member, where the support member is configured to support a battery cell, and the expansion member is configured to press the support member so that the support member switches from a first state to a second state. Under the condition that the support member is in the first state, an accommodating space for accommodating binder is formed between the support member and the battery cell, the binder being used to bind the support member and the battery cell; and under the condition that the support member is in the second state, at least part of the expansion member abuts against the support member to press the support member and make the accommodating space have a smaller volumetric capacity than under the condition that the support member is in the first state. In this way, the volumetric capacity of the accommodating space for accommodating binder between the box and the battery cell can be adjusted as required. Considering that the volumetric capacity of the accommodating space can be reduced in the second state, less binder can be injected under the first state. This reduces the possibility of binder overflow, thereby improving the safety performance of the battery and also increasing the energy density of the battery.

Optionally, the support member includes a support portion configured to support the battery cell and an accommodating cavity configured to accommodate at least part of the expansion member to press the support member. The accommodating cavity is configured to accommodate at least part of the expansion member, so as to reduce space occupied by the support member and the expansion member in the box, thus increasing the energy density of the battery.

Optionally, the support member further includes an opening communicating with the accommodating cavity, and at least part of the expansion member goes through the opening into the accommodating cavity. In this way, the expansion member can be conveniently accommodated in the accommodating cavity, thereby reducing the difficulty of assembling the battery.

Optionally, the support portion includes a first wall and a second wall opposite to each other. The first wall and the second wall function as walls of the accommodating cavity, and at least one of the first wall and the second wall is configured to be bound to the battery cell using the binder. At least one of the two opposite walls of the support portion is bonded to the battery cell using the binder, so that the number of support portions needed to fix the battery cell can be flexibly adjusted, thereby increasing the energy density of the battery.

Optionally, the support portion further includes a deformable wall configured to connect the first wall and the second wall. The deformable wall is configured to deform when the first wall and/or the second wall is pressed. The deformable wall being disposed between the first wall and the second wall can increase the flexibility of the support portion and prevent the support portion from breaking when being pressed.

Optionally, at least part of the deformable wall is arced. The whole or a part of the deformable wall being arced simplifies processing and facilitates manufacturing.

Optionally, the expansion member includes a third wall and a fourth wall opposite to each other. The third wall is configured to abut against and press the first wall, and/or the fourth wall is configured to abut against and press the second wall. In this way, the expansion member presses the support member more effectively.

Optionally, the expansion member further includes a connecting wall configured to connect the third wall and the fourth wall. The connecting wall being disposed between the third wall and the fourth wall opposite to each other can improve the structural strength of the expansion member.

Optionally, the expansion member includes a hollow cavity, where the third wall, the fourth wall, and the connecting wall together enclose the hollow cavity. The expansion member being configured to be a structure with a hollow cavity can reduce the weight of the expansion member, thus increasing the energy density of the battery.

Optionally, under the condition that the support member is in the first state, a minimum distance between the first wall and the second wall is D1, and a maximum distance between the third wall and the fourth wall is D2, where D1<D2. In this way, the support portion can be pressed by the expansion member so that the support member switches to the second state.

Optionally, the expansion member includes a gas bag, where the gas bag is configured to inflate upon injection of gas to abut against and press the first wall and/or the second wall. Using the gas bag as part or whole of the expansion member can reduce the weight of the expansion member, thus increasing the energy density of the battery.

A second aspect of this application provides a battery including a battery cell and any embodiment of the box provided according to the first aspect of this application, where the box is configured to accommodate the battery cell. In this way, the battery manufactured has the advantages of high energy density and good safety performance.

A third aspect of this application provides an electric device including the battery provided in the second aspect of this application, where the battery is configured to supply electric energy. In this way, the electric device manufactured has the advantages of long power consumption time and good battery safety performance.

A fourth aspect of this application provides a method for manufacturing battery, including: providing a battery cell; providing a box, where the box includes a support member configured to support a battery cell and an expansion member configured to press the support member so that the support member switches from a first state to a second state, where under the condition that the support member is in the first state, an accommodating space for accommodating binder is formed between the support member and the battery cell, the binder being used to bind the support member and the battery cell, and under the condition that the support member is in the second state, at least part of the expansion member abuts against the support member to press the support member and make the accommodating space have a smaller volumetric capacity than under the condition that the support member is in the first state; and accommodating the battery cell in the box. The battery manufactured according to this method has the advantages of high energy density and good safety performance.

A fifth aspect of this application provides a device for manufacturing battery, including a providing module and an assembling module. The providing module is configured to provide a battery cell and a box, where the box includes a support member and an expansion member, where the support member is configured to support the battery cell, and the expansion member is configured to press the support member so that the support member switches from a first state to a second state, where under the condition that the support member is in the first state, an accommodating space for accommodating binder is formed between the support member and the battery cell, the binder being used to bind the support member and the battery cell, and under the condition that the support member is in the second state, at least part of the expansion member abuts against the support member to press the support member and make the accommodating space have a smaller volumetric capacity than under the condition that the support member is in the first state. The assembling module is configured to accommodate the battery cell in the box. The battery manufactured in this way has the advantages of high energy density and good safety performance.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same parts are represented by same reference symbols. In the accompanying drawings:
FIG. 1 is a schematic structural diagram of a vehicle according to an embodiment of this application;
FIG. 2 is a schematic structural diagram of a battery pack according to an embodiment of this application;
FIG. 3 is a schematic structural diagram of a box according to an embodiment of this application;
FIG. 4 is a schematic structural diagram of a battery module according to an embodiment of this application;
FIG. 5 is a schematic structural exploded view of a battery cell according to an embodiment of this application;
FIG. 6 is a schematic diagram of a connection between a battery cell and a box in a battery according to an embodiment of this application;
FIG. 7 is a schematic diagram of a support member in a first state according to an embodiment of this application;
FIG. 8 is a schematic diagram of a support member in a second state according to an embodiment of this application;
FIG. 9 is a local schematic diagram of a connection between a battery cell and a support member in a battery according to an embodiment of this application;
FIG. 10 is a schematic structural diagram of a support portion according to an embodiment of this application;
FIG. 11 is a schematic structural diagram of an expansion member according to an embodiment of this application;
FIG. 12 is a schematic structural diagram of another expansion member according to an embodiment of this application;
FIG. 13 is a schematic flowchart of a method for manufacturing battery according to an embodiment of this application;
FIG. 14 is a schematic flowchart of step S3 in FIG. 13 in this application; and
FIG. 15 is a schematic block diagram of an apparatus for manufacturing battery according to an embodiment of this application.

Reference signs in specific embodiments are as follows:
1. vehicle; 10. battery; 11. controller; 12. motor;
20. battery module; 21. battery cell; 211. end cover; 211a. electrode terminal; 212. housing; 213. cell assembly; 213a. tab; 214. liquid bag;
30. box; 300. accommodating space; 301. first portion; 302. second portion;
31. support member; 311. support portion; 311a. first wall; 311b. second wall; 311c. deformable wall; 312. accommodating cavity; 313. opening;
32. expansion member; 32a. third wall; 32b. fourth wall; 32c. connecting wall; 32d. hollow cavity; 32e. gas bag;
40. manufacturing device; 41. providing module; and 42. assembling module.

### DESCRIPTION OF EMBODIMENTS

The following describes in detail the embodiments of technical solutions in this application with reference to the accompanying drawings. The following embodiments are merely used to describe technical solutions in this application more explicitly, and therefore they are merely used as examples and do not constitute any limitation on the protection scope of this application.

It should be noted that, unless otherwise stated, the technical terms or scientific terms used in the embodiments of this application should be the usual meanings understood by persons of ordinary skill in the art to which the embodiments of this application belong.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on the embodiments of this application.

In addition, the technical terms "first", "second", and the like are merely for the purpose of description, and shall not be understood as any indication or implication of relative importance or any implicit indication of the number of technical features indicated. In the description of the embodiments of this application, "a plurality of" means at least two unless otherwise specifically stated.

In the description of the embodiments of this application, unless otherwise specified and defined explicitly, the terms "mount", "connect", "join", and "fix" should be understood in their general senses. For example, they may be a fixed connection, a detachable connection, or an integral connection, or may be a mechanical connection or an electrical connection, or may be a direct connection, an indirect connection via an intermediate medium, or communication between two elements or an interaction between two elements. Persons of ordinary skill in the art can understand specific meanings of these terms in the embodiments of this application as appropriate to specific situations.

In the description of the embodiments of this application, unless otherwise specified and defined explicitly, that a first feature is "above" or "below" a second feature may mean that the first and second features are in direct contact or that the first and second features are in indirect contact via an intermediary. Moreover, that the first feature is "above", "over", and "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

In the existing battery manufacturing process, a battery cell needs to be assembled in a box. To secure the battery cell in the box, binder is usually injected between the battery cell and a beam or side wall of the box to create a bond. However, in the process of injecting binder, to ensure a connection strength between the box and the battery cell, workers typically inject excessive binder, causing binder injected between the battery cell and the beam or side wall of the box to overflow onto a top cover of the battery cell due to a pressure between the battery cell and the box, that is, binder overflow occurs. The top cover of the battery cell usually has functional apparatuses such as an explosion-proof apparatus and an electrical connection apparatus, but binder stuck to the top cover affects the explosion-proof function or charging and discharging performance of the battery cell. In addition, excessive binder injected reduces the energy density of the battery. Therefore, how binder overflow is reduced during battery assembly has become an urgent problem to be solved.

The applicant found in the research that making at least part of a beam or side wall of a box connecting a battery cell movable relative to the battery cell can alter the volumetric capacity of an accommodating space for accommodating binder between the battery cell and the beam or side wall. By adjusting the volumetric capacity of the accommodating space for accommodating binder, binder overflow can be reduced. Specifically, a component can be disposed to press the beam or side wall so that the beam or side wall moves toward the battery cell so as to alter the volumetric capacity of the accommodating space for accommodating binder, thereby reducing binder overflow.

This application provides a battery box, a battery including such box, and an electric device using such battery. Such box is suitable for various batteries, such as battery modules and battery packs, or primary and secondary batteries, for example, secondary batteries including nickel-metal hydride batteries, nickel-cadmium batteries, lead-acid (or lead-storage) batteries, lithium-ion batteries, sodium-ion batteries, polymer batteries, and the like. Such batteries are applicable to various electric devices that use batteries, for example, mobile phones, portable devices, laptop computers, battery-operated vehicles, electric toys, electric tools, electric vehicles, ships, and spacecraft, for example, spacecraft including airplanes, rockets, space shuttles, and spaceships. The batteries are used to provide electric energy for the foregoing electric devices.

It should be understood that the technical solutions described in the embodiments of this application are not only applicable to the batteries and electric devices described above but also applicable to all batteries including a box and electric devices using batteries. However, for the brevity of description, in the following embodiments, the electric vehicle is used as an example for description.

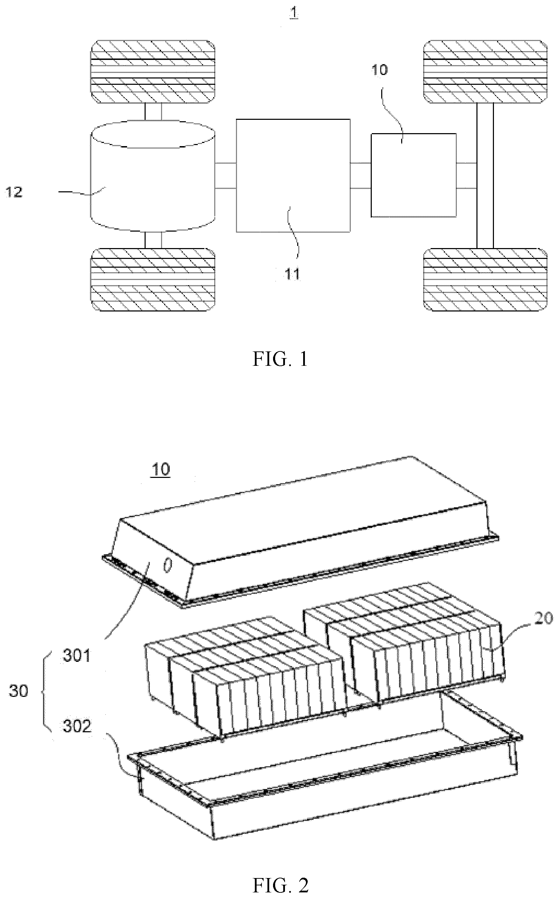

Refer to FIG. 1, FIG. 1 is a schematic structural diagram of a vehicle 1 according to some embodiments of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1 is provided with a battery 10 inside, where the battery 10 may be disposed at the bottom, front, or rear of the vehicle 1. The battery 10 may be configured to supply power to the vehicle 1. For example, the battery 10 may be used as an operational power source for the vehicle 1. The vehicle 1 may further include a controller 11 and a motor 12, where the controller 11 is configured to control the battery 10 to supply power to the motor 12, for example, to satisfy power needs of start, navigation, and driving of the vehicle 1.

In some embodiments of this application, the battery 10 can be used as not only the operational power source for the vehicle 1 but also a driving power source for the vehicle 1, replacing or partially replacing fossil fuel or natural gas to provide driving traction for the vehicle 1.

In order to meet different requirements for power use, the battery 10 may include a plurality of battery cells 21. A battery cell 21 is a smallest element constituting a battery module or a battery pack. The plurality of battery cells 21 can be connected in series and/or in parallel through an electrode terminal for various application scenarios. The battery mentioned in this application includes a battery module or a battery pack. The plurality of battery cells 21 may be connected in series, parallel, or series-parallel, wherein being connected in series-parallel means a combination of series and parallel connections. The battery 10 may also be called a battery pack. The plurality of battery cells 21 in the embodiments of this application may directly constitute a battery pack, or may first constitute battery modules 20, and then the battery modules 20 constitute a battery pack.

FIG. 2 is a schematic structural diagram of a battery 10 according to an embodiment of this application. In FIG. 2, the battery 10 may include a plurality of battery modules 20 and a box 30. The plurality of battery modules 20 are accommodated in the box 30. The box 30 is configured to accommodate the battery cells 21 or the battery modules 20 to prevent a liquid or another foreign matter from affecting charging or discharging of the battery cells 21. The box 30 may be a simple three-dimensional structure such as a rectangular structure or a cylindrical structure or a spherical structure or may be a complex three-dimensional structure formed by combining simple three-dimensional structures such as a rectangular structure or a cylindrical structure or a spherical structure. This is not limited in the embodiments of this application. The box 30 may be made of an alloy material such as an aluminum alloy and an iron alloy, a polymer material such as polycarbonate and polyisocyanurate foam, or a composite material produced from materials such as glass fiber and epoxy resin. This is not limited in the embodiments of this application either.

In some embodiments, the box 30 may include a first portion 301 and a second portion 302. The first portion 301 and the second portion 302 cover each other to jointly define a space for accommodating the battery cells 21. The second portion 302 may be a hollow structure with one end open, the first portion 301 may be a plate structure, and the first portion 301 covers an open side of the second portion 302 so that the first portion 301 and the second portion 302 jointly define a space for accommodating the battery cells 21. The first portion 301 and the second portion 302 may both be a hollow structure with one side open, and the open side of the first portion 301 covers the open side of the second portion 302.

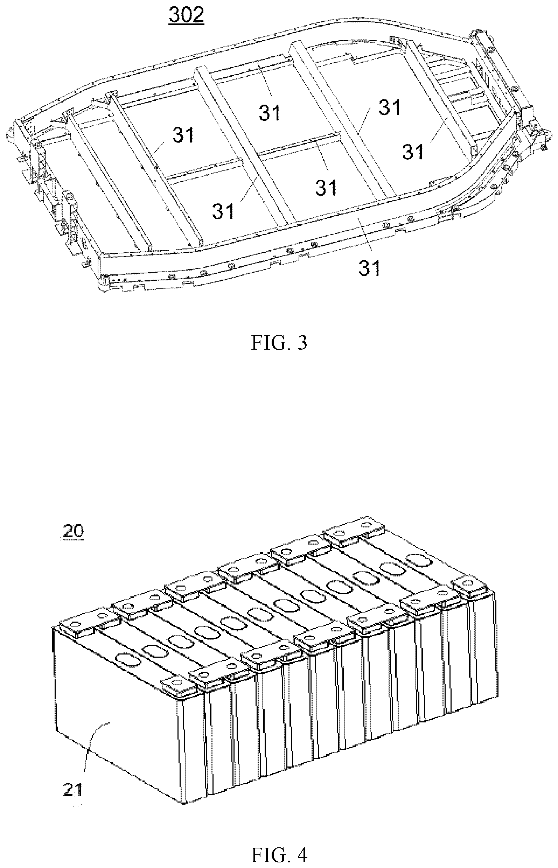

The second portion 302 of the box 30 may be a hollow box as shown in FIG. 2, and the battery modules 20 or battery cells 21 are directly placed into a cavity of the second portion 302. The second portion 302 can alternatively be a structure including transverse beams and longitudinal beams inside as shown in FIG. 3. The transverse beams and longitudinal beams divide the inner space of the second portion 302 into unit spaces in which the battery modules 20 or battery cells 21 are placed. The transverse beams, the longitudinal beams, or a side wall of the second portion 302 can serve as a support member 31 to support the battery cells 21.

The box 30 is not limited to a specific internal structure in the embodiments of this application, but for the brevity of description, the box 30 including the second portion 302 containing the transverse beams, longitudinal beams, and other structures as shown in FIG. 3 is used as an example in the following embodiments.

FIG. 4 is a schematic structural diagram of a battery module 20 according to an embodiment of this application. In FIG. 4, the battery module 20 may include a plurality of battery cells 21. The plurality of battery cells 21 may first be connected in series, parallel, or series-parallel to constitute battery modules 20, and then a plurality of battery modules 20 may be connected in series, parallel, or series-parallel to constitute a battery 10. In this application, the battery cell 21 may include a lithium-ion battery, a sodium-ion battery, a magnesium-ion battery, or the like. This is not limited in the embodiments of this application. The battery cell 21 may be cylindrical, flat, rectangular, or another shape, and this is not limited in the embodiments of this application either. The battery cells 21 are usually categorized into three types depending on their packaging: a cylinder battery cell 21, a prismatic battery cell 21, and a pouch battery cell 21, and this is not limited in the embodiments of this application either. However, for the brevity of description, the following embodiments are all described by taking a prismatic cell 21 as an example.

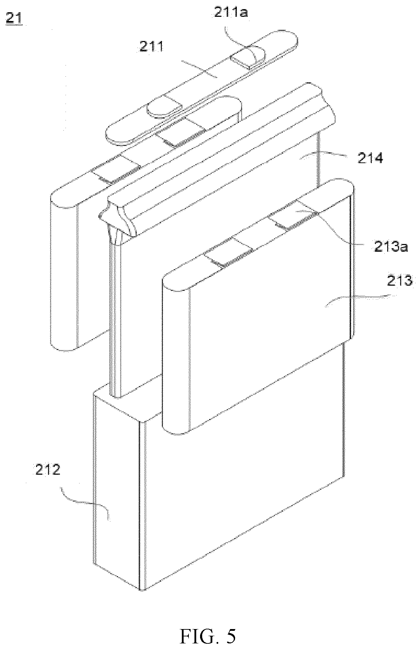

FIG. 5 is a schematic structural exploded view of a battery cell 21 according to some embodiments of this application. The battery cell 21 is a smallest unit constituting a battery. As shown in FIG. 5, the battery cell 21 includes an end cover 211, a housing 212, a cell assembly 213, a liquid bag 214, and other functional components.

The end cover 211 is a component that covers an opening of the housing 212 to isolate the internal environment of the battery cell 21 from an external environment. The shape of the end cover 211 is not limited and may be adapted to the shape of the housing 212 to fit the housing 212. Optionally, the end cover 211 may be made of a material with a specified hardness and strength (for example, aluminum alloy), so that the end cover 211 is less likely to deform when subjected to extrusion and collision, allowing the battery cell 21 to have higher structural strength and enhanced safety performance. Functional components such as an electrode terminal 211a may be provided on the end cover 211. The electrode terminal 211a may be configured to electrically connect to the cell assembly 213 for outputting or inputting electrical energy of the battery cell 21. In some embodiments, the end cover 211 may further be provided with a pressure relief mechanism for releasing internal pressure when the internal pressure or a temperature of the battery cell 21 reaches a threshold. The end cover 211 may also be made of various materials, such as copper, iron, aluminum, stainless steel, aluminum alloy, and plastic, which are not particularly limited in the embodiments of this application. In some embodiments, an insulator may also be provided at an inner side of the end cover 211. The insulator may be configured to isolate an electrically connected component in the housing 212 from the end cover 211 to reduce the risk of short circuit. For example, the insulator may be made of plastic, rubber, or the like.

The housing 212 is an assembly configured to form the internal environment of the battery cell 21 together with the end cover 211, where the formed internal environment may be configured to accommodate the cell assembly 213, an electrolyte, and other components. The housing 212 and the end cover 211 may be separate components, an opening may be provided on the housing 212, and the end cover 211 covers the opening to form the internal environment of the battery cell 21. The end cover 211 and the housing 212 are not limited and may alternatively be integrated. Specifically, the end cover 211 and the housing 212 may form a shared connection surface before other components are disposed inside the housing, and then the housing 212 is covered with the end cover 211 when the inside of the housing 212 needs to be enclosed. The housing 212 may be of various shapes and sizes, such as a cuboid shape, a cylindrical shape, and a hexagonal prism shape. Specifically, the shape of the housing 212 may be determined according to a specified shape and size of the cell assembly 213. The housing 212 may be made of various materials, such as copper, iron, aluminum, stainless steel, aluminum alloy, and plastic, which are not particularly limited in the embodiments of this application.

The cell assembly 213 is a component in the battery cell 21 in which electrochemical reactions occur. The housing 212 may include one or more cell assemblies 213. The cell assembly 213 is mainly formed by winding or laminating a positive-electrode plate and a negative-electrode plate, and a separator is generally provided between the positive-electrode plate and the negative-electrode plate. Parts of the positive electrode plate and the negative electrode plate with active substances constitute a body portion of the cell assembly, while parts of the positive electrode plate and the negative electrode plate without active substances separately constitute a tab 213a. A positive tab and a negative tab may both be located at one end of the body portion or be located at two ends of the body portion respectively. During charging and discharging of the battery, a positive electrode active substance and a negative electrode active substance react with the electrolyte, and the tabs 213a are connected to the electrode terminals to form a current loop.

The liquid bag 214 is disposed in the housing 212 to contain the electrolyte, at least corresponding to the side wall of the cell assembly 213.

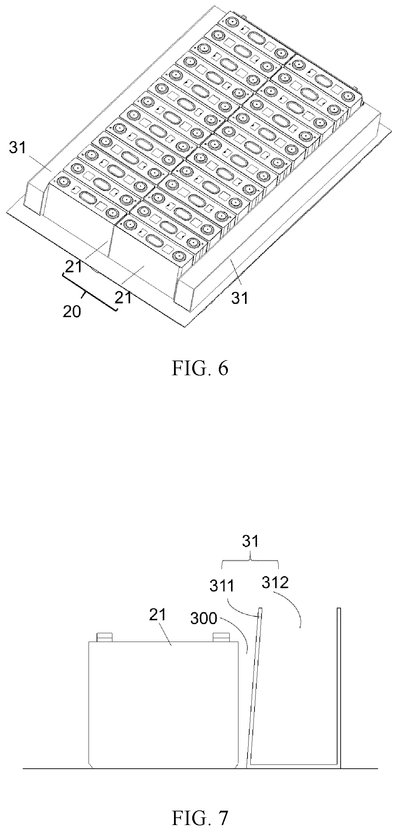

FIG. 6 is a schematic diagram of fixing a battery module 20 composed of a plurality of battery cells 21 in a box 30 to two support members 31 in the box 30 according to an embodiment of this application. The support member 31 in the box 30 may be a transverse beam or a longitudinal beam in the box 30 or a side wall of the box 30, which is not limited in the embodiment of this application.

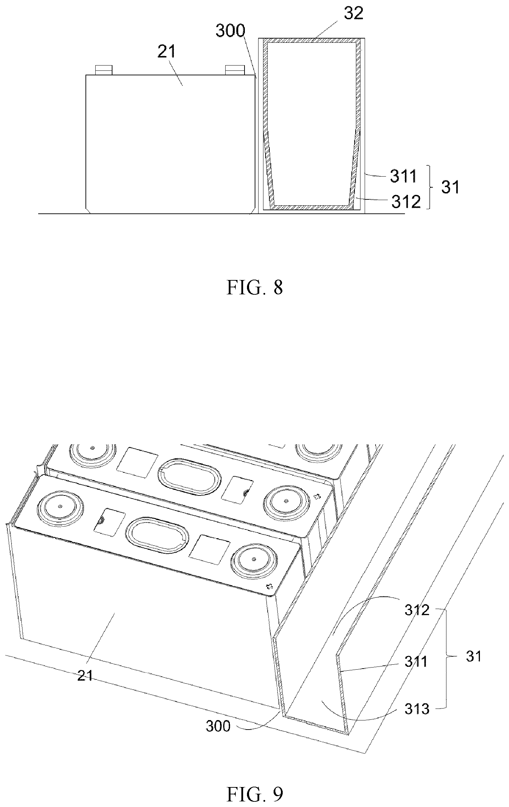

A first aspect of this application provides a box 30 of a battery 10. As shown in FIG. 7 and FIG. 8, the box 30 includes a support member 31 and an expansion member 32, where the support member 31 is configured to support a battery cell 21, and the expansion member 32 is configured to press the support member 31 so that the support member 31 switches from a first state to a second state. Under the condition that the support member 31 is in the first state as shown in FIG. 7, an accommodating space 300 for accommodating binder (not shown in the figure) is formed between the support member 31 and the battery cell 21, the binder being used to bind the support member 31 and the battery cell 21; and under the condition that the support member 31 is in the second state as shown in FIG. 8, at least part of the expansion member 32 abuts against the support member 31 to press the support member 31 and make the accommodating space 300 have a smaller volumetric capacity than under the condition that the support member 31 is in the first state.

The support member 31 is configured to support the battery cell 21 placed inside the box 30. The support member 31 may be a side wall or a transverse or longitudinal beam connected to the battery cell 21 in the box 30. The support member 31 can connect to one end or one side of the battery cell 21. The support member 31 may be made of an alloy material such as an aluminum alloy and an iron alloy, a polymer material such as polycarbonate and polyisocyanurate foam, or a composite material produced from materials such as glass fiber and epoxy resin.

The binder is used to bind the battery cell 21 and the support member 31 to fix the battery cell 21 or a battery module 20. The binder may be a fluid such as glue. The material of the binder may include one or more of polyvinylidene fluoride, polytetrafluoroethylene, carboxymethyl cellulose sodium, butadiene rubber, polyacrylic acid, polyacrylate, polyacrylate sodium, alginic acid, alginate sodium, polyurethane, acrylic acid, epoxy acrylate, or modified silane.

The accommodating space 300 is configured to accommodate binder for binding the battery cell 21 and the support member 31. The accommodating space 300 is between the battery cell 21 and the support member 31. The accommodating space 300 includes at least one opening for injecting binder. The shape and volumetric capacity of the accommodating space 300 change as the positional relationship between the battery cell 21 and the support member 31 changes.

The expansion member 32 is configured to be able to press the support member 31 so that the support member 31 switches from the first state to the second state. The expansion member 32 may be made of an alloy material such as an aluminum alloy, an iron alloy, and a magnesium alloy, a polymer material such as polycarbonate, polyisocyanurate foam, and rubber, or a composite material produced from materials such as glass fiber and epoxy resin.

Abutment means a state in which two connected parts are pressed against each other, that is, there are interaction forces between the two connected parts.

The first state indicates a situation where the expansion member 32 and the support member 31 are not abutting against each other. In the first state, the expansion member 32 and the support member 31 may not be connected, or the expansion member 32 and the support member 31 may be connected but not abut against each other. In the first state, the accommodating space 300 for accommodating binder is present between the support member 31 and the battery cell 21, and binder can be injected into the accommodating space 300.

The second state indicates a situation where the expansion member 32 and the support member 31 are abutting against each other. In the second state, the whole or a part of the expansion member 32 abuts against the support member 31 to press the support member 31 so that relative positions of the support member 31 and the battery cell 21 change, thereby making the accommodating space 300 have a smaller volumetric capacity in the second state than in the first state. The reduction of the accommodating space 300 causes the binder inside to shift towards an opening of the accommodating space 300, and then spread out between the support member 31 and the battery cell 21.

According to the embodiments of this application, the volumetric capacity of the accommodating space 300 for accommodating binder between the box 30 and the battery cell 21 can be changed as required. Considering that the volumetric capacity of the accommodating space 300 can be reduced in the second state, less binder can be injected in the first state. This reduces the possibility of binder overflow, thereby improving the safety performance of the battery 10 and also increasing the energy density of the battery 10.

In some embodiments of this application, as shown in FIG. 9, the support member 31 includes a support portion 311 configured to support the battery cell 21 and an accommodating cavity 312 for accommodating at least part of the expansion member 32 to press the support member 31.

The support portion 311 is a portion specifically configured to support the battery cell 21 in the support member 31, and the support portion 311 may be a portion of the support member 31 connected to the battery cell 21.

The support member 31 may be a structure with a hollow cavity, and the hollow cavity is the accommodating cavity 312. The accommodating cavity 312 is configured to accommodate a part or the whole of the expansion member 32 pressing the support portion 311. The section of the accommodating cavity 312 can be a simple geometric figure such as a rectangle, a circle, or a triangle, or a complex figure formed by combining simple geometric figures such as a rectangle, a circle, and a triangle.

According to the embodiments of this application, the accommodating cavity 312 being disposed to accommodate at least part of the expansion member 32 can reduce space occupied by the support member 31 and the expansion member 32 in the box 30, thereby increasing the energy density of the battery 10.

In some embodiments of this application, as shown in FIG. 9, the support member 31 further includes an opening 313 communicating with the accommodating cavity 312, and at least part of the expansion member 32 goes through the opening 313 into the accommodating cavity 312.

The support member 31 may include one or more openings 313 communicating with the accommodating cavity 312. The shape of the opening 313 can be a simple geometric figure such as a rectangle, a circle, or a triangle, or a complex figure formed by combining simple geometric figures such as a rectangle, a circle, and a triangle.

According to the embodiments of this application, the opening 313 communicating with the accommodating cavity 312 is disposed, such that the expansion member 32 can be conveniently accommodated in the accommodating cavity 312, thereby reducing the difficulty of manufacturing the battery 10.

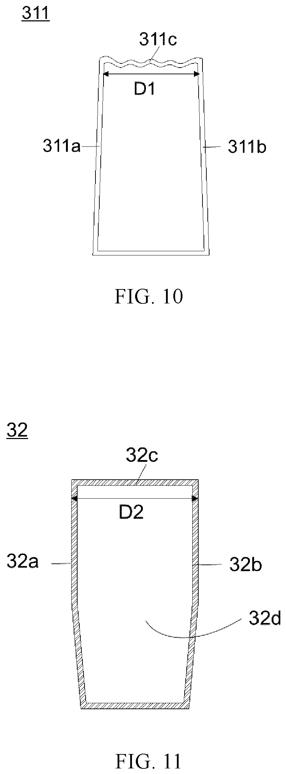

In some embodiments of this application, as shown in FIG. 10, the support portion 311 includes a first wall 311a and a second wall 311b opposite to each other. The first wall 311a and the second wall 311b function as walls of the accommodating cavity 312, and at least one of the first wall 311a and the second wall 311b is configured to be bonded to the battery cell 21 using the binder.

The first wall 311a and the second wall 311b of the support portion 311 are opposite to each other. For example, under the condition that the section of the support portion 311 is a polygon, the first wall 311a and the second wall 311b can be located on two opposite sides of the polygon, and the accommodating cavity 312 can be an inner space of the polygon; under the condition that the section of the support portion 311 is a triangle, the first wall 311a and the second wall 311b can be located on two adjacent sides of the triangle, and the accommodating cavity 312 can be an inner space of the triangle; and under the condition that the section of the support portion 311 is a circle, the first wall 311a and the second wall 311b may be located on two semicircle arcs respectively, and the accommodating cavity 312 may be an inner space of the circle.

Optionally, in some embodiments of this application, only one wall of the support portion 311 is bonded to the battery cell 21 using the binder; and in this embodiment, the wall bonded to the battery cell 21 using the binder is the first wall 311a or the second wall 311b, and a wall opposite this wall is the second wall 311b or the first wall 311a. In some embodiments of this application, two opposite walls of the support portion 311 are both bonded to the battery cell 21 using the binder; and in this embodiment, one of the walls bonded to the battery cell 21 using the binder is the first wall 311a, and a wall opposite this wall is the second wall 311b.

According to the embodiments of this application, at least one of the two opposite walls of the support portion 311 is bonded to the battery cell 21 using the binder, such that the number of support portions 311 required to fix the battery cell 21 can be flexibly adjusted, thus increasing the energy density of the battery 10.

In some embodiments of this application, as shown in FIG. 10, the support portion 311 further includes a deformable wall 311c configured to connect the first wall 311a and the second wall 311b. The deformable wall 311c is configured to deform when the first wall 311a and/or the second wall 311b is pressed.

The first wall 311a and the second wall 311b of the support portion 311 are opposite, and the deformable wall 311c is arranged between the first wall 311a and the second wall 311b of the support portion 311 for connecting the first wall 311a and the second wall 311b. For example, Under the condition that the section of the support portion 311 is a polygon, the first wall 311a and the second wall 311b can be located on two opposite sides of the polygon, and the deformable wall 311c may be located on any one or more sides connecting the two opposite sides on which the first wall 311a and the second wall 311b are located; under the condition that the section of the support portion 311 is a triangle, the first wall 311a and the second wall 311b can be located on two adjacent sides of the triangle, and the deformable wall 311c may be located on a third side of the triangle; and under the condition that the section of the support portion 311 is a circle, the first wall 311a and the second wall 311b may be located on two semicircle arcs respectively, and the deformable wall 311c may be located on any arc connecting the two arcs.

When one of the first wall 311a and the second wall 311b deforms when being pressed, or when both of the first wall 311a and the second wall 311b deform when being pressed, the deformable wall 311c connecting the first wall 311a and the second wall 311b also deforms. The material of the deformable wall 311c may include rubber, silica gel, metal, and other materials that are easy to deform.

According to the embodiments of this application, the deformable wall 311c is disposed between the first wall 311a and the second wall 311b, such that the support portion 311 is more flexible, thereby preventing the support portion 311 from breaking when being pressed.

In some embodiments of this application, as shown in FIG. 10, at least part of the deformable wall 311c is arced.

The whole or a part of the deformable wall 311c is arced, for example, a part or the whole of the deformable wall 311c is wave-shaped. When the first wall 311a and/or the second wall 311b is pressed, an arc portion of the deformable wall 311c gradually expands, the curvature of the arc becomes smaller, and the length of the deformable wall 311c increases accordingly.

According to the embodiments of this application, the whole or a part of the deformable wall 311c being arced simplifies processing and facilitates manufacturing.

In some embodiments of this application, as shown in FIG. 11, the expansion member 32 includes a third wall 32a and a fourth wall 32b opposite to each other. The third wall 32a is configured to abut against and press the first wall 311a; and/or the fourth wall 32b is configured to abut against and press the second wall 311b.

Under the condition that only the first wall 311a of the support portion 311 is bonded to the battery cell 21 using the binder, the third wall 32a of the expansion member 32 is configured to abut against and press the first wall 311a; under the condition that only the second wall 311b of the support portion 311 is bonded to the battery cell 21 using the binder, the fourth wall 32b of the expansion member 32 is configured to abut against and press the second wall 311b; and under the condition that the first wall 311a and the second wall 311b of the support portion 311 are bonded to the battery cell 21 using the binder, the third wall 32a of the expansion member 32 is configured to abut against and press the first wall 311a, and the fourth wall 32b of the expansion member 32 is configured to abut against and press the second wall 311b.

According to the embodiments of this application, the third wall 32a and the fourth wall 32b of the expansion member 32 are disposed corresponding to the first wall 311a and the second wall 311b of the support portion 311 respectively, such that the expansion member 32 presses the support member 31 more effectively.

In some embodiments of this application, as shown in FIG. 11, the expansion member 32 further includes a connecting wall 32c configured to connect the third wall 32a and the fourth wall 32b.

The connecting wall 32c is disposed between the third wall 32a and the fourth wall 32b to connect the third wall 32a and the fourth wall 32b opposite to each other. The connecting wall 32c may be made of an alloy material such as an aluminum alloy, an iron alloy, and a magnesium alloy, a polymer material such as polycarbonate, polyisocyanurate foam, and rubber, or a composite material produced from materials such as glass fiber and epoxy resin.

According to the embodiments of this application, the connecting wall 32c being disposed between the opposite third wall 32a and the fourth wall 32b can increase the structural strength of the expansion member 32.

In some embodiments of this application, as shown in FIG. 11, the expansion member 32 has a hollow cavity 32d. The third wall 32a, the fourth wall 32b, and the connecting wall together enclose the hollow cavity 32d.

The hollow cavity 32d is located inside the expansion member 32, the section of the hollow cavity 32d can be a simple geometric figure such as a rectangle, a circle, or a triangle, or a complex figure formed by combining simple geometric figures such as a rectangle, a circle, and a triangle.

According to the embodiments of this application, the expansion member 32 being designed to be a structure having the hollow cavity 32d can reduce the weight of the expansion member 32, thereby increasing the energy density of the battery 10.

In some embodiments of this application, as shown in FIG. 10 and FIG. 11, under the condition that the support member 31 is in the first state, a minimum distance between the first wall 311a and the second wall 311b is D1, and a maximum distance between the third wall 32a and the fourth wall 32b is D2, where D1<D2.

According to the embodiments of this application, under the condition that the support member 31 is in the first state, the minimum distance between the first wall 311a and the second wall 311b of the support portion 311 is less than the maximum distance between the third wall 32a and the fourth wall 32b of the expansion member. In this way, the expansion member 31 presses the support portion 311 so that the support member 31 switches to the second state.

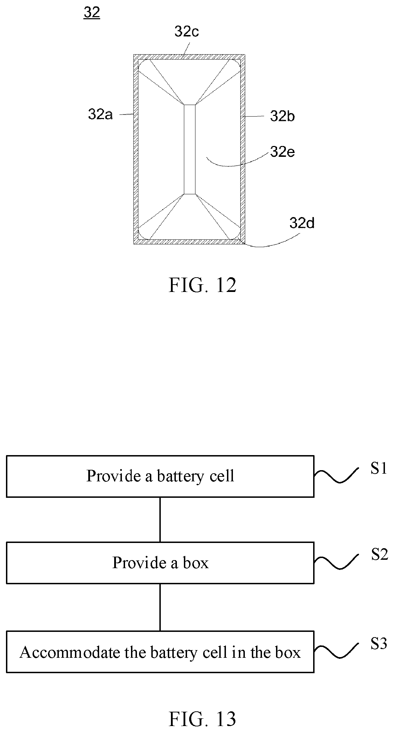

In some embodiments of this application, as shown in FIG. 12, the expansion member 32 has a gas bag 32e. The gas bag 32e is configured to inflate upon injection of gas to abut against and press the first wall 311a and/or the second wall 311b.

The gas bag 32e can be a part or the whole of the expansion member 32. The gas bag 32e can fit with the accommodating cavity 312 of the support member 31 or fit with the hollow cavity 32d of the expansion member 32 in shape. The gas bag 32e can be made of sheepskin, woven cloth, or EPDM (Ethylene-Propylene-Diene Monomer, ethylene-propylene-diene monomer) eco-friendly rubber, offering reliable protection against leakage and damage. The gas bag 32e can alternatively be made of a high temperature resistant elastic material. Inert gas can be filled in the inner cavity of the gas bag 32e. The gas bag 32e is in a deflated state before gas is injected, and is in an inflated state after gas is injected. The gas bag 32e in the inflated state abuts against and presses at least one of the first wall 311a and the second wall 311b of the support portion 311.

According to the embodiments of this application, as the gas bag 32e is a part or the whole of the expansion member 32, the weight of the expansion member 32 can be reduced, thus increasing the energy density of the battery 10.

According to some embodiments of this application, referring to FIG. 6 to FIG. 9, this application provides the battery box, where the box 30 includes the support member 31 and the expansion member 32. The support member 31 includes the support portion 311, the accommodating cavity 312, and the opening 313 communicating with the accommodating cavity 312. At least part of the expansion member 32 goes through the opening 313 into the accommodating cavity 312 to press the support portion 311. In the first state, the accommodating space 300 for accommodating binder is formed between the support member 31 and the battery cell 21, the binder being used to bind the support member 31 and the battery cell 21; and in the second state, at least part of the expansion member 32 abuts against the support member 31 to press the support member 31 and make the accommodating space 300 have a smaller volumetric capacity than under the condition that the support member 31 is in the first state.

A second aspect of this application provides a battery, where the battery may include a battery cell 21 and any embodiment of the box 30 provided in the first aspect of this application, and the box 30 is configured to accommodate the battery cell 21. According to the embodiments of this application, the battery 10 including the battery cell 21 and any box 30 provided in the first aspect of this application has the advantages of high energy density and good safety performance.

A third aspect of this application provides an electric device including the battery 10 provided in the second aspect of this application, where the battery 10 is configured to supply electric energy. In this way, the electric device manufactured has the advantages of long power consumption time and good battery safety performance.

A fourth aspect of this application provides a method for manufacturing the battery 10, as shown in FIG. 13, including:
S1. Provide a battery cell 21.

S2. Provide a box 30. The box 30 includes a support member 31 and an expansion member 32, where the support member 31 is configured to support a battery cell 21, and the expansion member 32 is configured to press the support member 31 so that the support member 31 switches from a first state to a second state. Under the condition that the support member 31 is in the first state, an accommodating space for accommodating binder is formed between the support member 31 and the battery cell 21, the binder being used to bind the support member 31 and the battery cell 21; and under the condition that the support member 31 is in the second state, at least part of the expansion member 32 abuts against the support member 31 to press the support member 31 and make the accommodating space have a smaller volumetric capacity than under the condition that the support member 31 is in the first state.

S3. Accommodate the battery cell 21 in the box 30.

The battery 10 manufactured according to the embodiments of this application has the advantages of high energy density and good safety performance.

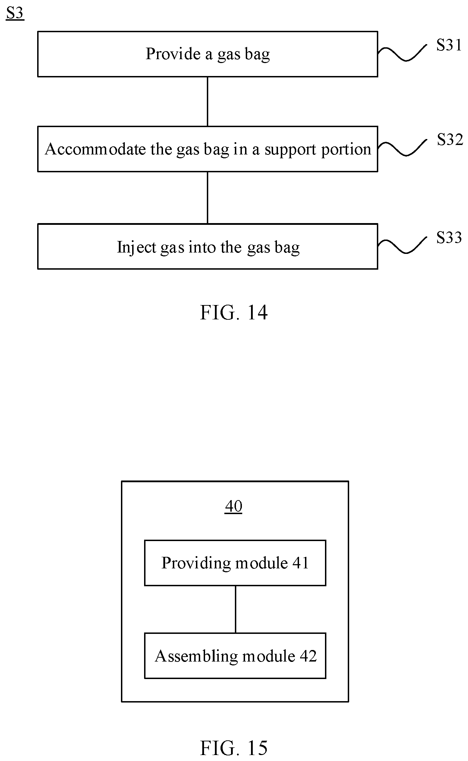

In some embodiments of this application, as shown in FIG. 14, S3 specifically includes the following steps.

S31. Provide a gas bag 32e, where the gas bag 32e can be a part or the whole of the expansion member 32.

S32. Accommodate the gas bag 32e in an accommodating cavity 312 of the support portion 311 or accommodate the gas bag 32e in a hollow cavity 32d of the expansion member 32.

S33. Inject gas into the gas bag 32e so that the gas bag 32e inflates to abut against and press the support portion 311.

The battery 10 manufactured according to the embodiments of this application has the advantage of high energy density.

A fifth aspect of this application provides a device 40 for manufacturing battery, as shown in FIG. 15, including a providing module 41 and an assembling module 42. The providing module 41 is configured to provide a battery cell 21 and a box 30, where the box 30 includes a support member 31 and an expansion member 32, where the support member 31 is configured to support the battery cell 21, and the expansion member 32 is configured to press the support member 31 so that the support member 31 switches from a first state to a second state. Under the condition that the support member 31 is in the first state, an accommodating space for accommodating binder is formed between the support member 31 and the battery cell 21, the binder being used to bind the support member 31 and the battery cell 21; and under the condition that the support member 31 is in the second state, at least part of the expansion member 32 abuts against the support member 31 to press the support member 31 and make the accommodating space have a smaller volumetric capacity than under the condition that the support member 31 is in the first state. The assembling module 42 is configured to accommodate the battery cell 21 in the box 30.

The battery 10 manufactured according to the embodiments of this application has the advantages of high energy density and good safety performance.

In conclusion, it should be noted that the above examples are merely intended for describing the technical solutions of this application but not for limiting this application. Although this application is described in detail with reference to the foregoing examples, persons of ordinary skill in the art should understand that they may still make modifications to the technical solutions described in the foregoing examples without departing from the scope of the technical solutions of the examples of this application. They should all be covered in the scope of claims and summary in this application.

## Claims

1. A battery box (30), **characterized by** comprising:
a support member (31) configured to support a battery cell (21); and
an expansion member (32) configured to press the support member (31) so that the support member (31) switches from a first state to a second state;
wherein under the condition that the support member (31) is in the first state, an accommodating space (300) for accommodating binder is formed between the support member (31) and the battery cell (21), the binder being used to bind the support member (31) and the battery cell (21); and
under the condition that the support member (31) is in the second state, at least part of the expansion member (32) abuts against the support member (31) to press the support member (31) and make the accommodating space (300) have a smaller volumetric capacity than under the condition that the support member (31) is in the first state.

2. The box (30) according to claim 1, **characterized in that** the support member (31) comprises:
a support portion (311) configured to support the battery cell (21); and
an accommodating cavity (312) configured to accommodate at least part of the expansion member (32) to press the support portion (311).

3. The box (30) according to claim 2, **characterized in that** the support member (31) further comprises an opening (313) communicating with the accommodating cavity (312), wherein at least part of the expansion member (32) goes through the opening (313) into the accommodating cavity (312).

4. The box (30) according to claim 2, **characterized in that** the support portion (311) comprises:
a first wall (311a) and a second wall (311b) opposite to each other, wherein the first wall (311a) and the second wall (311b) function as walls of the accommodating cavity (312), and at least one of the first wall (311a) and the second wall (311b) is configured to be bound to the battery cell (21) using the binder.

5. The box (30) according to claim 4, **characterized in that** the support portion (311) further comprises a deformable wall (311c) configured to connect the first wall (311a) and the second wall (311b), wherein the deformable wall (311c) is configured to deform when the first wall (311a) and/or the second wall (311b) is pressed.

6. The box (30) according to claim 5, **characterized in that** at least part of the deformable wall (311c) is arced.

7. The box (30) according to claim 4, **characterized in that** the expansion member (32) comprises a third wall (32a) and a fourth wall (32b) opposite to each other, wherein the third wall (32a) is configured to abut against and press the first wall (311a); and/or
the fourth wall (32b) is configured to abut against and press the second wall (311b).

8. The box (30) according to claim 7, **characterized in that** the expansion member (32) further comprises a connecting wall (32c) configured to connect the third wall (32a) and the fourth wall (32b).

9. The box (30) according to claim 8, **characterized in that** the expansion member (32) comprises a hollow cavity (32d), wherein the third wall (32a), the fourth wall (32b), and the connecting wall (32c) together enclose the hollow cavity (32d).

10. The box (30) according to claim 7, **characterized in that** under the condition that the support member (31) is in the first state, a minimum distance between the first wall (311a) and the second wall (311b) is D1, and a maximum distance between the third wall (32a) and the fourth wall (32b) is D2, wherein D1<D2.

11. The box (30) according to any one of claims 4 to 10, **characterized in that** the expansion member (32) comprises a gas bag (32e), wherein the gas bag (32e) is configured to inflate upon injection of gas to abut against and press the first wall (311a) and/or the second wall (311b).

12. A battery (10), **characterized by** comprising:
a battery cell (21); and
the box (30) according to any one of claims 1 to 11, wherein the box (30) is configured to accommodate the battery cell (21).

13. An electric device, **characterized by** comprising the battery (10) according to claim 12, wherein the battery (10) is configured to supply electric energy.

14. A method for manufacturing the battery according to claim 12, **characterized by** comprising:
providing (S1) a battery cell;
providing (S2) a box, wherein the box comprises:
a support member configured to support the battery cell; and
an expansion member, wherein the expansion member is configured to press the support member so that the support member switches from a first state to a second state;
wherein under the condition that the support member is in the first state, an accommodating space for accommodating binder is formed between the support member and the battery cell, the binder being used to bind the support member and the battery cell; and
under the condition that the support member is in the second state, at least part of the expansion member abuts against the support member to press the support member and make the accommodating space have a smaller volumetric capacity than under the condition that the support member is in the first state; and
accommodating (S3) the battery cell in the box.

15. A device for manufacturing battery, **characterized by** comprising:
a providing module (41) configured to provide a battery cell (21) and a box (30), wherein the box (30) comprises:
a support member (31) configured to support the battery cell (21); and
an expansion member (32), wherein the expansion member (32) is configured to press the support member (31) so that the support member (31) switches from a first state to a second state;
wherein under the condition that the support member (31) is in the first state, an accommodating space (300) for accommodating binder is formed between the support member (31) and the battery cell (21), the binder being used to bind the support member (31) and the battery cell (21); and
under the condition that the support member (31) is in the second state, at least part of the expansion member (32) abuts against the support member (31) to press the support member (31) and make the accommodating space (300) have a smaller volumetric capacity than under the condition that the support member (31) is in the first state; and
an assembling module (42) configured to accommodate the battery cell (21) in the box (30).

## Patentansprüche

1. Batteriekasten (30), **dadurch gekennzeichnet, dass** er Folgendes umfasst:
ein Stützelement (31), das konfiguriert ist, um eine Batteriezelle (21) zu stützen; und
ein Ausdehnungselement (32), das konfiguriert ist, um das Stützelement (31) so zu drücken, dass das Stützelement (31) von einem ersten Zustand in einen zweiten Zustand wechselt;
wobei unter der Bedingung, dass sich das Stützelement (31) im ersten Zustand befindet, ein Aufnahmeraum (300) zwischen dem Stützelement (31) und der Batteriezelle (21) zum Aufnehmen von Bindemittel gebildet wird, wobei das Bindemittel dazu verwendet wird, das Stützelement (31) und die Batteriezelle (21) zu binden; und
unter der Bedingung, dass sich das Stützelement (31) im zweiten Zustand befindet, mindestens ein Teil des Ausdehnungselements (32) an dem Stützelement (31) anliegt, um das Stützelement (31) zu drücken und zu bewirken, dass der Aufnahmeraum (300) ein geringeres Fassungsvermögen aufweist als unter der Bedingung, dass sich das Stützelement (31) im ersten Zustand befindet.

2. Kasten (30) nach Anspruch 1, **dadurch gekennzeichnet, dass** das Stützelement (31) Folgendes umfasst:
einen Stützabschnitt (311), der konfiguriert ist, um die Batteriezelle (21) zu stützen; und
einen Aufnahmeraum (312), der konfiguriert ist, um mindestens einen Teil des Ausdehnungselements (32) aufzunehmen, um den Stützabschnitt (311) zu drücken.

3. Kasten (30) nach Anspruch 2, **dadurch gekennzeichnet, dass** das Stützelement (31) ferner eine Öffnung (313) umfasst, die mit dem Aufnahmeraum (312) in Verbindung steht, wobei mindestens ein Teil des Ausdehnungselements (32) durch die Öffnung (313) in den Aufnahmeraum (312) geht.

4. Kasten (30) nach Anspruch 2, **dadurch gekennzeichnet, dass** der Stützabschnitt (311) Folgendes umfasst:
eine erste Wand (311a) und eine zweite Wand (311b), die einander gegenüberliegen, wobei die erste Wand (311a) und die zweite Wand (311b) als Wände des Aufnahmeraums (312) fungieren, und mindestens eine der ersten Wand (311a) und der zweiten Wand (311b) konfiguriert ist, um unter Verwendung des Bindemittels an die Batteriezelle (21) gebunden zu werden.

5. Kasten (30) nach Anspruch 4, **dadurch gekennzeichnet, dass** der Stützabschnitt (311) ferner eine verformbare Wand (311c) umfasst, die konfiguriert ist, um die erste Wand (311a) und die zweite Wand (311b) zu verbinden, wobei die verformbare Wand (311c) konfiguriert ist, um sich zu verformen, wenn die erste Wand (311a) und/oder die zweite Wand (311b) gedrückt wird.

6. Kasten (30) nach Anspruch 5, **dadurch gekennzeichnet, dass** mindestens ein Teil der verformbaren Wand (311c) gewölbt ist.

7. Kasten (30) nach Anspruch 4, **dadurch gekennzeichnet, dass** das Ausdehnungselement (32) eine dritte Wand (32a) und eine vierte Wand (32b) umfasst, die einander gegenüberliegen, wobei die dritte Wand (32a) konfiguriert ist, um an der ersten Wand (311a) anzuliegen und diese zu drücken; und/oder
die vierte Wand (32b) konfiguriert ist, um an der zweiten Wand (311b) anzuliegen und diese zu drücken.

8. Kasten (30) nach Anspruch 7, **dadurch gekennzeichnet, dass** das Ausdehnungselement (32) ferner eine Verbindungswand (32c) umfasst, die konfiguriert ist, um die dritte Wand (32a) und die vierte Wand (32b) zu verbinden.

9. Kasten (30) nach Anspruch 8, **dadurch gekennzeichnet, dass** das Ausdehnungselement (32) einen Hohlraum (32d) umfasst, wobei die dritte Wand (32a), die vierte Wand (32b) und die Verbindungswand (32c) gemeinsam den Hohlraum (32d) umschließen.

10. Kasten (30) nach Anspruch 7, **dadurch gekennzeichnet, dass** unter der Bedingung, dass sich das Stützelement (31) im ersten Zustand befindet, eine Mindestentfernung zwischen der ersten Wand (311a) und der zweiten Wand (311b) D1 ist und eine Maximalentfernung zwischen der dritten Wand (32a) und der vierten Wand (32b) D2 ist, wobei D1 < D2.

11. Kasten (30) nach einem der Ansprüche 4 bis 10, **dadurch gekennzeichnet, dass** das Ausdehnungselement (32) einen Gassack (32e) umfasst, wobei der Gassack (32e) konfiguriert ist, um sich beim Einleiten von Gas aufzublasen, um an der ersten Wand (311a) und/oder der zweiten Wand (311b) anzuliegen und diese zu drücken.

12. Batterie (10), **dadurch gekennzeichnet, dass** sie Folgendes umfasst:
eine Batteriezelle (21); und
den Kasten (30) nach einem der Ansprüche 1 bis 11, wobei der Kasten (30) konfiguriert ist, um die Batteriezelle (21) aufzunehmen.

13. Elektrische Vorrichtung, **dadurch gekennzeichnet, dass** sie die Batterie (10) nach Anspruch 12 umfasst, wobei die Batterie (10) konfiguriert ist, um elektrische Energie zu liefern.

14. Verfahren zum Herstellen der Batterie nach Anspruch 12, **dadurch gekennzeichnet, dass** sie Folgendes umfasst:
Bereitstellen (S1) einer Batteriezelle;
Bereitstellen (S2) eines Kastens, wobei der Kasten Folgendes umfasst:
ein Stützelement, das konfiguriert ist, um die Batteriezelle zu stützen; und
ein Ausdehnungselement, wobei das Ausdehnungselement konfiguriert ist, um das Stützelement zu drücken, sodass das Stützelement von einem ersten Zustand in einen zweiten Zustand wechselt;
wobei unter der Bedingung, dass sich das Stützelement im ersten Zustand befindet, ein Aufnahmeraum zwischen dem Stützelement und der Batteriezelle zum Aufnehmen von Bindemittel gebildet wird, wobei das Bindemittel dazu verwendet wird, das Stützelement und die Batteriezelle zu binden; und
unter der Bedingung, dass sich das Stützelement im zweiten Zustand befindet, mindestens ein Teil des Ausdehnungselements an dem Stützelement anliegt, um das Stützelement zu drücken und zu bewirken, dass der Aufnahmeraum ein geringeres Fassungsvermögen aufweist als unter der Bedingung, dass sich das Stützelement im ersten Zustand befindet. und
Aufnehmen (S3) der Batteriezelle im Kasten.

15. Vorrichtung zum Herstellen einer Batterie, **dadurch gekennzeichnet, dass** es Folgendes umfasst:
ein Bereitstellungsmodul (41), das konfiguriert ist, um eine Batteriezelle (21) und einen Kasten (30) bereitzustellen, wobei der Kasten (30) Folgendes umfasst:
ein Stützelement (31), das konfiguriert ist, um die Batteriezelle (21) zu stützen; und
ein Ausdehnungselement (32), wobei das Ausdehnungselement (32) konfiguriert ist, um das Stützelement (31) zu drücken, sodass das Stützelement (31) von einem ersten Zustand in einen zweiten Zustand wechselt;
wobei unter der Bedingung, dass sich das Stützelement (31) im ersten Zustand befindet, ein Aufnahmeraum (300) zwischen dem Stützelement (31) und der Batteriezelle (21) zum Aufnehmen von Bindemittel gebildet wird, wobei das Bindemittel dazu verwendet wird, das Stützelement (31) und die Batteriezelle (21) zu binden; und
unter der Bedingung, dass sich das Stützelement (31) im zweiten Zustand befindet, mindestens ein Teil des Ausdehnungselements (32) an dem Stützelement (31) anliegt, um das Stützelement (31) zu drücken und zu bewirken, dass der Aufnahmeraum (300) ein geringeres Fassungsvermögen aufweist als unter der Bedingung, dass sich das Stützelement (31) im ersten Zustand befindet; und
ein Montagemodul (42), das konfiguriert ist, um die Batteriezelle (21) in dem Kasten (30) aufzunehmen.

## Revendications

1. Boîte de batterie (30), **caractérisée en ce qu'**elle comprend :
un élément de support (31) conçu pour supporter une cellule de batterie (21) ; et
un élément d'expansion (32) conçu pour presser l'élément de support (31) de telle sorte que l'élément de support (31) commute d'un premier état à un deuxième état ;
dans laquelle à la condition que l'élément de support (31) soit dans le premier état, un espace de réception (300) destiné à recevoir un liant est formé entre l'élément de support (31) et la cellule de batterie (21), le liant étant utilisé pour lier l'élément de support (31) et la cellule de batterie (21) ; et
à la condition que l'élément de support (31) soit dans le deuxième état, au moins une partie de l'élément d'expansion (32) vient en butée contre l'élément de support (31) pour presser l'élément de support (31) et faire en sorte que l'espace de réception (300) ait une capacité volumétrique plus petite que dans la condition où l'élément de support (31) est dans le premier état.

2. Boîte (30) selon la revendication 1, **caractérisée en ce que** l'élément de support (31) comprend :
une partie de support (311) conçue pour supporter la cellule de batterie (21) ; et
une cavité de réception (312) conçue pour recevoir au moins une partie de l'élément d'expansion (32) pour presser la partie de support (311).

3. Boîte (30) selon la revendication 2, **caractérisée en ce que** l'élément de support (31) comprend en outre une ouverture (313) communiquant avec la cavité de réception (312), au moins une partie de l'élément d'expansion (32) passant à travers l'ouverture (313) dans la cavité de réception (312).

4. Boîte (30) selon la revendication 2, **caractérisée en ce que** la partie de support (311) comprend :
une première paroi (311a) et une deuxième paroi (311b) en regard l'une par rapport à l'autre, la première paroi (311a) et la deuxième paroi (311b) fonctionnant comme des parois de la cavité de réception (312), et au moins l'une de la première paroi (311a) et la deuxième paroi (311b) étant conçue pour être liée à la cellule de batterie (21) à l'aide du liant.

5. Boîte (30) selon la revendication 4, **caractérisée en ce que** la partie de support (311) comprend en outre une paroi déformable (311c) conçue pour raccorder la première paroi (311a) et la deuxième paroi (311b), la paroi déformable (311c) étant conçue pour se déformer quand la première paroi (311a) et/ou la deuxième paroi (311b) est pressée.

6. Boîte (30) selon la revendication 5, **caractérisée en ce qu'**au moins une partie de la paroi déformable (311c) est en arc.

7. Boîte (30) selon la revendication 4, **caractérisée en ce que** l'élément d'expansion (32) comprend une troisième paroi (32a) et une quatrième paroi (32b) en regard l'une par rapport à l'autre, la troisième paroi (32a) étant conçue pour venir en butée contre et presser la première paroi (311a) ; et/ou
la quatrième paroi (32b) étant conçue pour venir en butée contre et presser la deuxième paroi (311b).

8. Boîte (30) selon la revendication 7, **caractérisée en ce que** l'élément d'expansion (32) comprend en outre une paroi de raccordement (32c) conçue pour raccorder la troisième paroi (32a) et la quatrième paroi (32b).

9. Boîte (30) selon la revendication 8, **caractérisée en ce que** l'élément d'expansion (32) comprend une cavité creuse (32d), la troisième paroi (32a), la quatrième paroi (32b), et la paroi de raccordement (32c) ensemble enfermant la cavité creuse (32d).

10. Boîte (30) selon la revendication 7, **caractérisée en ce que** à la condition que l'élément de support (31) soit dans le premier état, une distance minimale entre la première paroi (311a) et la deuxième paroi (311b) est D1, et une distance maximale entre la troisième paroi (32a) et la quatrième paroi (32b) est D2, avec D1<D2.

11. Boîte (30) selon l'une quelconque des revendications 4 à 10, **caractérisée en ce que** l'élément d'expansion (32) comprend une poche de gaz (32e), la poche de gaz (32e) étant conçue pour gonfler lors de l'injection de gaz pour venir en butée contre et presser la première paroi (311a) et/ou la deuxième paroi (311b).

12. Batterie (10), **caractérisée en ce qu'**elle comprend :
une cellule de batterie (21) ; et
la boîte (30) selon l'une quelconque des revendications 1 à 11, la boîte (30) étant conçue pour recevoir la cellule de batterie (21).

13. Dispositif électrique, **caractérisé en ce qu'**il comprend la batterie (10) selon la revendication 12, la batterie (10) étant conçue pour fournir de l'énergie électrique.

14. Procédé de fabrication de la batterie selon la revendication 12, **caractérisé en ce qu'**il comprend les étapes suivantes consistant à :
fournir (S1) une cellule de batterie ;
fournir (S2) une boîte, la boîte comprenant :
un élément de support conçu pour supporter la cellule de batterie ; et
un élément d'expansion, l'élément d'expansion étant conçu pour presser l'élément de support de telle sorte que l'élément de support commute d'un premier état à un deuxième état ;
dans laquelle à la condition que l'élément de support soit dans le premier état, un espace de réception destiné à recevoir un liant est formé entre l'élément de support et la cellule de batterie, le liant étant utilisé pour lier l'élément de support et la cellule de batterie ; et
à la condition que l'élément de support soit dans le deuxième état, au moins une partie de l'élément d'expansion vient en butée contre l'élément de support pour presser l'élément de support et faire en sorte que l'espace de réception ait une capacité volumétrique plus petite que dans la condition où l'élément de support est dans le premier état ; et
recevoir (S3) la cellule de batterie dans la boîte.

15. Dispositif de fabrication de batterie, **caractérisé en ce qu'**il comprend :
un module de fourniture (41) conçu pour fournir une cellule de batterie (21) et une boîte (30), la boîte (30) comprenant :
un élément de support (31) conçu pour supporter la cellule de batterie (21) ; et
un élément d'expansion (32), l'élément d'expansion (32) étant conçu pour presser l'élément de support (31) de telle sorte que l'élément de support (31) commute d'un premier état à un deuxième état ;
dans laquelle à la condition que l'élément de support (31) soit dans le premier état, un espace de réception (300) destiné à recevoir un liant est formé entre l'élément de support (31) et la cellule de batterie (21), le liant étant utilisé pour lier l'élément de support (31) et la cellule de batterie (21) ; et
à la condition que l'élément de support (31) soit dans le deuxième état, au moins une partie de l'élément d'expansion (32) vient en butée contre l'élément de support (31) pour presser l'élément de support (31) et faire en sorte que l'espace de réception (300) ait une capacité volumétrique plus petite que dans la condition où l'élément de support (31) est dans le premier état ; et
un module d'assemblage (42) conçu pour loger la cellule de batterie (21) dans la boîte (30).
